Europäisches Patentamt

European Patent Office

Office européen des brevets

(19)

(11) Numéro de publication : **0 323 359 B1**

# (12) FASCICULE DE BREVET EUROPEEN

(45) Date de publication du fascicule du brevet :
**15.04.92 Bulletin 92/16**

(51) Int. Cl.$^5$ : **G01C 19/64**

(21) Numéro de dépôt : **88403360.6**

(22) Date de dépôt : **29.12.88**

(54) **Dispositif de fixation de mécanisme d'activation pour gyromètre à laser.**

(30) Priorité : **30.12.87 FR 8718350**

(43) Date de publication de la demande :
**05.07.89 Bulletin 89/27**

(45) Mention de la délivrance du brevet :
**15.04.92 Bulletin 92/16**

(84) Etats contractants désignés :
**BE DE ES GB IT**

(56) Documents cités :
**DE-A- 3 544 074**
**GB-A- 2 112 202**

(73) Titulaire : **SEXTANT AVIONIQUE S.A.**
**Immeuble le Galilée Parc Tertiaire de Meudon**
**5/7 rue Jeanne Braconnier**
**F-92366 Meudon la Forêt Cédex (FR)**

(72) Inventeur : **Escobar, Edouard**
**39, Avenue du Maréchal Leclerc**
**F-86100 Chatellerault (FR)**
Inventeur : **Bonnaudet, Etienne**
**62, rue des trois Pigeons**
**F-86100 Chatellerault (FR)**

(74) Mandataire : **Marquer, Francis et al**
**Cabinet Moutard 35, Avenue Victor Hugo**
**F-78960 Voisins le Bretonneux (FR)**

EP 0 323 359 B1

**Description**

La présente invention concerne un perfectionnement à la fixation des systèmes d'oscillation mécanique pour gyromètre à laser (généralement dénommé activation). Elle s'applique à tous les gyromètres à laser, triangulaires ou carrés, monoaxes ou multiaxes.

D'une manière générale, on sait que les gyromètres à laser, appelés ci-après gyrolasers, comportent généralement un bloc optique dans lequel circulent deux ondes électromagnétiques tournant en sens inverse l'une de l'autre.

Pour éviter les effets du phénomène bien connu de blocage entre les deux ondes électromagnétiques (zone aveugle), le bloc optique du gyrolaser est généralement animé d'un mouvement de rotation alternatif de faible amplitude autour de son axe sensible. La fréquence et l'amplitude du mouvement sont choisies de telle façon que la vitesse angulaire du bloc optique soit la plus grande partie du temps plus forte que la zone aveugle.

Ce mouvement, appelé activation, est le plus souvent créé par un dispositif oscillant utilisant des moyens élastiques qui peuvent être placés à l'intérieur et au centre du bloc optique, et dont la raideur détermine, avec l'inertie dudit bloc optique, une fréquence d'oscillation qui est généralement entretenue par un moteur piézoélectrique, commandé par des circuits électroniques.

En pratique, les moyens élastiques sont réalisés sous forme d'une sorte de roue (roue d'activation) dont les rayons sont des lames élastiques sur lesquelles sont collées des céramiques piézoélectriques, et dont les dimensions déterminent leur raideur et donc la fréquence d'oscillation.

La partie extérieure de la roue d'activation qui est fixée au bloc optique doit lui transmettre des couples d'autant plus grands que la fréquence choisie pour l'oscillation est grande et que la vitesse crête du mouvement d'activation est grande elle aussi.

Le moyen de fixation du bloc optique sur la roue d'activation doit être capable de transmettre ces couples sans déformer le bloc optique, sans glisser et sans apporter d'amortissement à l'oscillation mécanique.

De nombreuses solutions ont été proposées pour réaliser cette fixation, solutions consistant généralement soit à coller le bloc optique autour de la roue, soit à serrer le bloc optique entre deux flasques solidaires de ladite roue.

Les solutions à base de collages ont donné lieu à diverses variantes pour limiter les déformations du bloc optique, qui se produisent sous l'effet des contraintes apparaissant en température du fait que le coefficient de dilatation du matériau de la partie extérieure de la roue n'est jamais aussi faible que celui du matériau du bloc optique.

Dans tous les cas, ces solutions ont l'inconvénient d'avoir une aptitude au démontage délicate.

Les solutions à base de serrage présentent aussi plusieurs inconvénients. En effet, pour transmettre un couple élevé, sans glisser, il faut, d'une part, que la force de serrage soit élevée, et, d'autre part, que le diamètre où s'effectue le serrage soit grand. Ces deux conditions favorisent des déformations du bloc optique sous l'effet des forces mises en jeu, malgré les précautions prises pour assurer la planéité des faces d'appui du bloc et des pièces de serrage.

Ces inconvénients demeurent, même dans le cas où on utilise des dispositions telles que celles prévues dans le brevet DE-A-35 44 074, pour compenser les phénomènes de dilatation différentielle entre le bloc optique et les pièces de serrage.

Pour remédier à ces inconvénients, la présente invention a pour objet un dispositif de fixation de mécanisme d'activation pour gyromètre laser du type comprenant ;

– un bloc optique monté oscillant sur un support et muni d'au moins un parcours optique, à l'intérieur duquel sont engendrées deux ondes laser inverses ;

– un système élastique réalisé en forme de roue comportant une couronne extérieure et un moyeu, reliés par des lames excitées par des céramiques piézoélectriques, le bloc optique étant serré entre deux couronnes de serrage, rendues solidaires de la couronne extérieure.

Selon l'invention, ce dispositif est caractérisé en ce que le serrage dudit bloc optique par lesdites couronnes se fait au travers d'un matériau plus ductile que celui desdites couronnes.

Des modes de réalisation de l'invention seront décrits ci-après à titre d'exemples non limitatifs, avec référence aux dessins annexés dans lesquels :

La figure 1 est une vue de dessus d'un gyrolaser selon l'art antérieur où le mécanisme d'activation est collé à l'intérieur du bloc optique ;

La figure 2 est une vue en coupe du gyrolaser de la figure 1 ;

La figure 3 est une vue en coupe d'un mécanisme d'activation selon l'art antérieur utilisant le serrage ;

La figure 4 est une vue en coupe d'un dispositif selon l'invention ;

Les figures 5 et 6 sont des vues en coupe partielle du dispositif selon l'invention ;

La figure 7 est une vue de dessous d'une variante d'une couronne de serrage du dispositif selon l'invention ; et

La figure 8 est une vue en coupe d'une autre variante du dispositif selon l'invention.

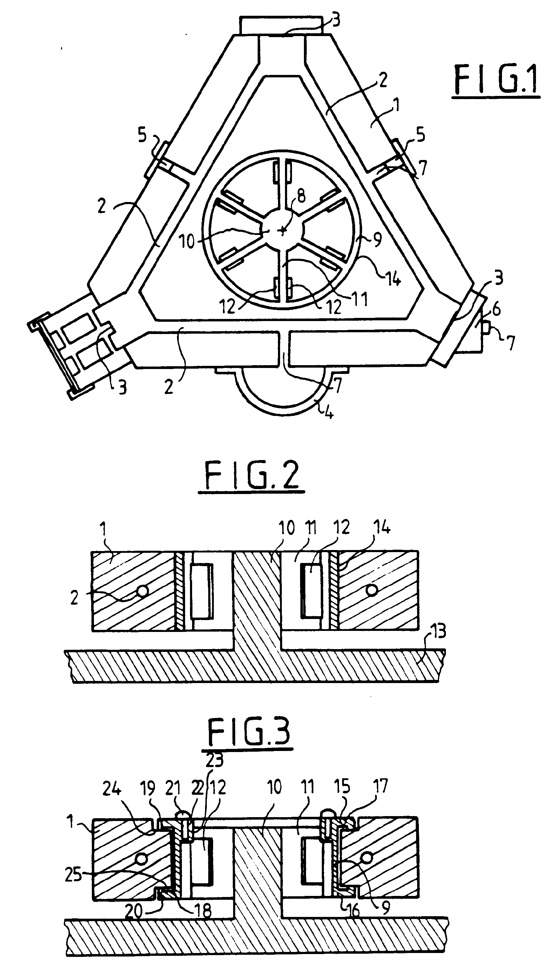

Comme précédemment mentionné, et ainsi que le montre la figure 1, un gyrolaser comprend notamment :

– un bloc optique 1, réalisé dans un matériau isolant et étanche à l'hélium, généralement une céramique vitrifiée du genre "zérodur", dans lequel sont percés des conduits 2, fermés par des miroirs 3 dont un au moins est généralement mobile et qui forment, avec lesdits conduits 2, un parcours optique, triangulaire dans le cas de la figure 1, mais qui peut prendre toute autre forme, un même bloc optique pouvant comporter plusieurs parcours optiques ;

– un système de sortie des informations placé sur l'un des miroirs 3 et comportant au moins un prisme de mélange 6 et un ensemble de cellules photoélectriques 7 ;

– une ou deux cathodes 4 fixées sur le bloc optique 1 ;

– une ou deux anodes 5 également fixées sur le bloc optique 1.

Ces cathodes et anodes constituent les électrodes du gyrolaser et sont reliées aux conduits 2 par des conduits de raccordement 7.

Le bloc optique 1 est rempli d'un mélange gazeux généralement à base d'hélium et de néon. Un courant électrique passant entre les électrodes excite ce mélange gazeux et crée un plasma dans les conduits de raccordement 7 et dans les conduits 2, plasma qui, en amplifiant la lumière, génère l'effet laser.

Ce bloc optique 1 est monté oscillant autour d'un axe 8 grâce à une roue d'activation. Celle-ci est composée d'une couronne extérieure 9, d'un moyeu central 10 et d'au moins trois lames 11 sur lesquelles sont collées des céramiques piézoélectriques 12, le plus souvent de part et d'autre de chaque lame. Ainsi que déjà mentionné, le bloc optique est le plus souvent percé d'un trou central dans lequel la roue d'activation est fixée, soit par un collage 14 de la couronne extérieure 9, soit encore par un système de pincement non représenté.

La figure 2 montre en vue en coupe le gyrolaser de la figure 1 et son dispositif d'activation ci-dessus décrits. On y voit clairement la partie centrale du moyeu 10 de la roue fixée sur une platine 13, qui peut constituer une partie du boîtier dudit gyrolaser, ainsi que les lames 11 formant ressort, les céramiques piézoélectriques 12 et l'emplacement du collage 14.

La figure 3 illustre un autre procédé de fixation du bloc optique selon l'art antérieur. Dans cette réalisation, le bloc optique 1 est serré entre deux couronnes 15 et 16. Ces deux couronnes peuvent avoir des lamages intérieurs 17 et 18, de sorte qu'elles aient deux surfaces d'appui 19 et 20 sur le bloc optique bien définies et du plus grand diamètre possible.

La couronne inférieure 16 est solidaire de la couronne extérieure 9 de la roue d'activation qui comporte, comme précédemment, un moyeu 10, des lames 11 et des céramiques 12.

La couronne supérieure 15 est fixée sur la couronne extérieure 9 de la roue d'activation par un moyen permettant d'ajuster le serrage, tel que des vis 21 passant dans des trous 22 et vissées dans des bossages 23 solidaires de ladite couronne extérieure 9 et disposés entre les lames 11 formant les rayons de la roue.

Pour minimiser l'encombrement, deux lamages 24 et 25 peuvent être usinés de part et d'autre du bloc optique afin de ménager un logement pour les deux couronnes 15 et 16.

On conçoit aisément qu'un tel dispositif puisse apporter des contraintes importantes et déformer le bloc optique, si l'on veut que le couple transmis à celui-ci, par le frottement résultant du serrage, soit suffisant, et ceci, quelle que soit la température.

En effet, la force transmise va dépendre de la pression de serrage, du coefficient de frottement des matériaux en présence et de leur élasticité. Pour des couples élevés, il y aura risque de glissement et d'usure des pièces.

Les exigences de planéité doivent être très grandes, pour éviter des déformations du bloc optique 1. Elles sont très difficiles à réaliser, surtout dans le cas des lamages 24 et 25.

En outre, le coefficient de température non nul de la couronne 9 fera que celui-ci se dilatera à chaud et que le serrage diminuera, ce qui limitera d'autant la possibilité de transmettre des couples élevés.

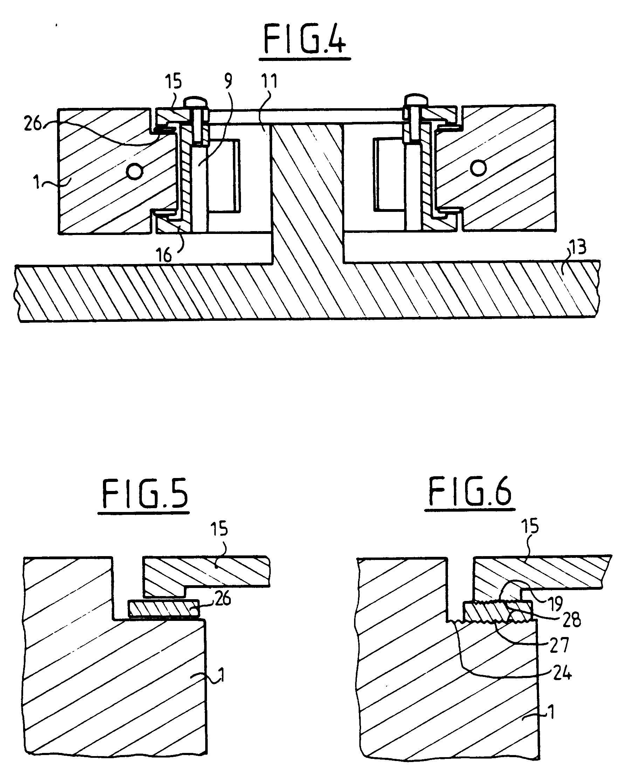

La figure 4 illustre le principe de l'invention qui consiste à intercaler un matériau 26, légèrement ductile, entre le bloc optique 1 et au moins l'une des couronnes 15 ou 16, et préférentiellement les deux, qui viennent le serrer.

Dans l'exemple de ladite figure 4, et ainsi que le montre mieux la figure 5, le matériau, préférentiellement de l'étain, est placé entre le bloc optique 1 et, par exemple, la couronne 15, sous forme de rondelle 26 dont l'épaisseur est avantageusement adaptée pour compenser la différence de coefficient de dilatation existant entre les diverses pièces.

La figure 6 illustre, en l'exagérant, le fonctionnement du dispositif. Les surfaces 27 et 19, respectivement du lamage 24 du bloc optique 1 et de la couronne 15 sont préalablement et préférentiellement dépolies et présentent des aspérités 28 dont les dimensions moyennes sont très supérieures aux erreurs de planéité desdites surfaces, de sorte que, sous l'effet de la pression de serrage, ces aspérités s'incrustent dans le matériau de la rondelle 26 dont la ductilité se prête bien à cette action. La profondeur de l'incrustation est d'autant plus importante que le serrage est fort, ce qui a pour effet de régulariser le serrage et d'en répartir également la pression sur toute la surface.

Cette incrustation a surtout pour effet d'augmenter de façon très importante le coefficient de frottement entre les pièces, entre le matériau de la rondelle 26 d'une part, le matériau du bloc optique 1 et celui des couronnes 15 et 16 d'autre part. Les couples transmis peuvent être ainsi beaucoup plus forts avec un serrage modéré et le bloc optique 1 ne risque plus d'être déformé.

Le matériau de la rondelle est choisi de sorte que son coefficient de dilatation soit beaucoup plus élevé que celui du matériau de la couronne 9, et l'étain, retenu préférentiellement, répond bien à ce critère. De cette façon, et du fait que le coefficient de dilatation du matériau du bloc optique 1 est généralement pratiquement nul, l'épaisseur de ladite rondelle 26 peut être ajustée pour que le serrage de l'ensemble reste constant quelle que soit la température.

Un autre inconvénient des dispositifs selon l'art antérieur provient du fait que les contraintes radiales dues à la température et imposées au bloc optique 1 par la couronne extérieure 9, si elle est collée, ou par les deux couronnes 15 et 16, si ledit bloc optique est serré, viennent modifier sa géométrie et influer sur les performances du gyrolaser.

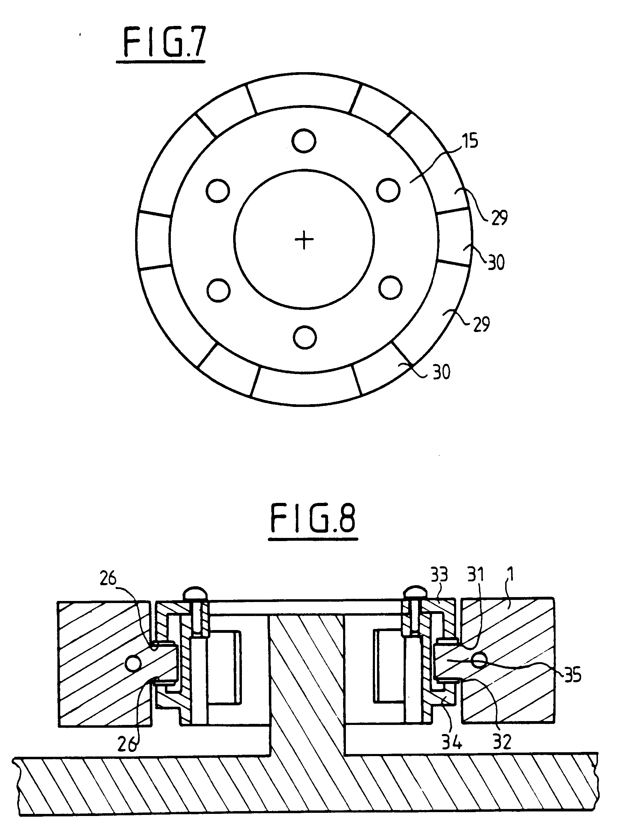

La présente invention, par l'accroissement du couple qu'elle permet d'obtenir, se prête bien à diminuer ces effets. Pour cela, ainsi que le montre la figure 7, des lamages supplémentaires 29 sont usinés dans les couronnes de serrage 15 et 16 de sorte que la surface d'appui ne soit plus une couronne mais des fractions de couronnes 30, placées de sorte que les effets des contraintes radiales sur la géométrie du bloc optique soit minimisés.

Dans cette réalisation, la rondelle reste bien entendu et de préférence entière, mais ne transmet des forces que là où elle est serrée, c'est-à-dire sous les fractions de couronnes 30.

La figure 8 illustre une variante qui permet de réduire encore les effets des contraintes radiales sur la géométrie du bloc optique. Lorsqu'en effet, un gradient thermique est appliqué sur le gyrolaser, de sorte que l'une des couronnes de serrage, 15 ou 16, soit plus chaude que l'autre, il apparaît une contrainte différentielle sur le bloc optique, imposée par la dilatation différente des susdites couronnes. Cette contrainte tend à déformer le bloc optique 1 et à nuire à ses performances.

La variante de la figure 8 réduit cet effet car elle diminue, d'une part, la différence de température entre les pièces concernées, à savoir les couronnes 15 et 16 et, d'autre part, le bras de levier sur lequel les contraintes s'exerceront.

Pour cela, le bloc optique 1 comporte deux lamages 31 et 32 beaucoup plus profonds que dans les solutions précédentes où les lamages 24 et 25 ne servaient qu'à réduire l'encombrement. Ces deux lamages, 31 et 32, délimitent un bossage 35 relativement étroit, inférieur par exemple au tiers de l'épaisseur du bloc optique lui-même.

Le serrage est effectué par des couronnes 33 et 34 adaptées à ces nouveaux lamages, au travers d'une et préférentiellement deux rondelles 26 du matériau précédemment défini tel que l'étain, et dont l'épaisseur aura également été ajustée pour compenser en température la dilatation relative des autres pièces.

## Revendications

1. Dispositif de fixation de mécanisme d'activation pour gyromètre laser du type comprenant :
   - un bloc optique (1) monté oscillant sur un support (13) et muni d'au moins un parcours optique, à l'intérieur duquel sont engendrées deux ondes laser inverses ;
   - un système élastique réalisé en forme de roue comportant une couronne extérieure (9) et un moyeu (10), reliés par des lames (11) excitées par des céramiques piézoélectriques, le bloc optique (1) étant serré entre deux couronnes de serrage (15 et 16), rendues solidaires de la couronne extérieure (9) ;

caractérisé en ce que le serrage dudit bloc optique par lesdites couronnes se fait au travers d'un matériau plus ductile que celui desdites couronnes (15, 16).

2. Dispositif de fixation de mécanisme d'activation selon la revendication 1,
caractérisé en ce que le matériau ductile est de l'étain.

3. Dispositif de fixation de mécanisme d'activation selon la revendication 1,
caractérisé en ce que le serrage du bloc optique (1), entre les deux couronnes (15 et 16), se fait au travers d'au moins une et préférentiellement deux rondelles (26) d'un matériau plus ductile que celui desdites couronnes.

4. Dispositif de fixation de mécanisme d'activation selon l'une des revendications 1 et 3,
caractérisé en ce que le matériau des rondelles (26) est de l'étain.

5. Dispositif de fixation de mécanisme d'activation selon l'une des revendications précédentes,
caractérisé en ce que l'état de surface des matériaux venant en contact avec le matériau ductile est un état dépoli.

6. Dispositif de fixation de mécanisme d'activation selon l'une des revendications précédentes,
caractérisé en ce que l'épaisseur de la rondelle en matériau ductile (26), et préférentiellement en étain, est ajustée pour compenser le coefficient de température différentiel, résultant de la combinaison des coefficients de température du matériau du bloc optique (1) et des pièces constituant le mécanisme d'activation.

7. Dispositif de fixation de mécanisme d'activation selon l'une des revendications précédentes,
caractérisé en ce que le serrage du bloc optique par l'intermédiaire des rondelles en matériau ductile (26) et préférentiellement en étain se fait par des plots préférentiellement en forme de fractions de couronnes (30).

8. Dispositif de fixation de mécanisme d'activation selon l'une des revendications précédentes, caractérisé en ce que le serrage du bloc optique (1) se fait sur un bossage (35) d'épaisseur réduite par rapport à l'épaisseur du bloc optique (1), et préférentiellement dans un rapport d'environ un tiers.

**Patentansprüche**

1. Befestigungseinrichtung des Aktivierungsmechanismus für Laserkreisel des Typs mit :
  – einer oszillierend auf eine Trägervorrichtung (13) montierten, mit mindestens einem optischen Pfad versehenen optischen Einheit (1), in der zwei gegensätzliche Laserwellen erzeugt werden,
  – einem elastischen System in Form eines Rades, das einen äusseren Kranz (9) und eine Nabe (10) aufweist, die durch, von piezoelektrischen Keramiken erregte, Lamellen (11) verbunden sind, und die optische Einheit (1) zwischen zwei Klemmringen (15 und 16) eingeklemmt ist, welche fest mit dem äusseren Kranz (9) verbunden sind, dadurch gekennzeichnet, dass das Klemmen der besagten optischen Einheit durch die Kränze mittels einer Materie erfolgt, die besser formbar ist als die der besagten Ringe (15, 16).

2. Befestigungseinrichtung eines Aktivierungsmechanismus nach Anspruch 1,
dadurch gekennzeichnet, dass die formbare Materie Zinn ist.

3. Befestigungseinrichtung eines Aktivierungsmechanismus nach Anspruch 1,
dadurch gekennzeichnet, dass die Klemmung der optischen Einheit (1) zwischen den beiden Ringen (15 und 16) mittels einer, vorzugsweise zweier, Scheiben (26) aus einer Materie erfolgt, die besser formbar ist als die der besagten Ringe.

4. Befestigungseinrichtung eines Aktivierungsmechanismus nach einem der Ansprüche 1 und 3,
dadurch gekennzeicnet, dass die Materie der Scheiben (26) Zinn ist.

5. Befestigungseinrichtung eines Aktivierungsmechanismus nach einem der vorhergehenden Ansprüche,
dadurch gekennzeichnet, dass die Oberfläche der mit dem formbaren Material in Kontakt tretenden Materien mattgeschliffen ist.

6. Befestigungseinrichtung eines Aktivierungsmechanismus nach einem der vorhergehenden Ansprüche,
dadurch gekennzeichnet, dass die Dicke der Scheibe aus formbarem Material (26) und vorzugsweise aus Zinn, so bestimmt wird, dass sie den Differentialtemperaturkoeffizienten ausgleicht, der sich aus der Kombination der Temperaturkoeffizienten der Materie der optischen Einheit (1) und der Materie der den Aktivierungsmechanismus bildenden Teile ergibt.

7. Befestigungseinrichtung eines Aktivierungsmechanismus nach einem der vorhergehenden Ansprüche,
dadurch gekennzeichnet,dass die Klemmung der optischen Einheit mittels der Scheiben aus formbarem Material (26) und vorzugsweise aus Zinn, durch Abschnitte erfolgt, die vorzugsweise die Form von Ringabschnitten (30) haben.

8. Befestigungseinrichtung eines Aktivierungsmechanismus nach einem der vorhergehenden Ansprüche,
dadurch gekennzeichnet, dass die Klemmung der optischen Einheit (1) durch einen Vorsprung (35) erfolgt, dessen Dicke geringer ist, als die der optischen Einheit (1) und vorzugsweise etwa ein Drittel dieser Einheit beträgt.

**Claims**

1. Laser gyroscope actuation mechanism fixing device comprising:
  – an optical unit (1) adapted to oscillate on a support (13) and having at least one optical path on which two opposite laser beams are generated;
  – a spring system implemented in the form of a wheel comprising an outer ring (9) and a hub (10) joined by blades (11) excited by piezoelectric ceramic crystals, the optical unit (1) being clamped between two clamping rings ( 15, 16 ) fastened to the outer ring (9);
characterised in that said optical unit is clamped by said rings through a material that is more ductile than the material of said rings (15, 16).

2. Laser gyroscope actuation mechanism fixing device according to claim 1
characterised in that the ductile material is tin.

3. Laser gyroscope actuation mechanism fixing device according to claim 1
characterised in that the optical unit (1) is clamped between the two rings (15, 16) through at least one and preferably two washers (26) of a material that is more ductile than the material of the two rings.

4. Laser gyroscope actuation mechanism fixing device according to claim 1 or claim 3
characterised in that the material of the washers (26) is tin.

5. Laser gyroscope actuation mechanism fixing device according to any one of the preceding claims characterised in that the surface of the materials in contact with the ductile material is roughened.

6. Laser gyroscope actuation mechanism fixing device according to any one of the preceding claims characterised in that the thickness of the ductile material, preferably tin, washer (26) is varied to compensate differential thermal expansion resulting from the combination of temperature coefficients of the material of the optical block (1) and of the parts constituting the actuation mechanism.

7. Laser gyroscope actuation mechanism fixing device according to any one of the preceding claims characterised in that the clamping of the optical unit through the intermediary of the ductile material, preferably tin, washers (26) is effected by discontinuous areas preferably in the form of segments (30) of rings.

8. Laser gyroscope actuation mechanism fixing device according to any one of the preceding claims characterised in that the optical unit (1) is clamped on a boss (35) whose thickness is reduced as compared with the thickness of the optical unit (1), preferably in a ratio of approximately one third.

FIG.1

FIG.2

FIG.3

# FIG.4

# FIG.5

# FIG.6

FIG.7

FIG.8